**Europäisches Patentamt**

**European Patent Office**

**Office européen des brevets**

(11) Veröffentlichungsnummer: **0 288 452**
**A1**

# EUROPÄISCHE PATENTANMELDUNG

(21) Anmeldenummer: 88890067.7

(22) Anmeldetag: 22.03.88

(51) Int. Cl.4: **A 21 D 13/00**
**A 21 D 2/34**

(30) Priorität: 24.03.87 AT 711/87

(43) Veröffentlichungstag der Anmeldung:
26.10.88 Patentblatt 88/43

(84) Benannte Vertragsstaaten:
AT BE CH DE FR GB IT LI LU NL SE

(71) Anmelder: Dirnbeck, Eduard
Bürgerspitalgasse 23
A-1060 Wien (AT)

(72) Erfinder: Dirnbeck, Eduard
Bürgerspitalgasse 23
A-1060 Wien (AT)

Kallinger, Wolfgang
Siebenbrunnenfeldgasse 5/12/12
A-1050 Wien (AT)

(74) Vertreter: Casati, Wilhelm, Dipl.-Ing. et al
Patentanwälte Casati, Wilhelm, Dipl.-Ing. Itze, Peter,
Dipl.-Ing. Amerlingstrasse 8
A-1061 Wien (AT)

(54) **Mit einer Fülle versehene Backware.**

(57) Die Erfindung bezieht sich auf eine mit einer Fülle versehene Backware, die aus einem Teiggemisch, vorzugsweise Weißgebäckteig und Pizzateig gefertigt ist, welchem Käse, vorzugsweise geriebener Käse gleichmäßig verteilt zugesetzt ist, sowie auf ein Verfahren zur Herstellung dieser Backware.

**EP 0 288 452 A1**

**Beschreibung**

## Mit einer Fülle versehene Backware

Die Erfindung bezieht sich auf eine mit einer Fülle versehene Backware, sowie auf ein Verfahren zur Herstellung desselben.

Derartige Backwaren sind bereits in verschiedenen Formen bekannt, und zwar einerseits als sogenannte gefüllte Salzstangen od. dgl. Bei diesen werden Salzstangen zunächst gebacken, danach ausgehöhlt und mit einer Fülle versehen. Es können natürlich die Salzstangen auch um einen Kern gerollt werden, wodurch beim Backen ein Hohlraum verbleibt, welcher anschließend dann mit einer entsprechenden Fülle aufgefüllt wird. Diese bekannten Backwaren haben dabei den Nachteil, daß sie in ihrer Herstellung einerseits sehr aufwendig sind und andererseits ihren guten Geschmack nur im frischen Zustand besitzen.

Weiters ist es bereits bekannt, eine Fülle in ein Teigblatt einzuschlagen und die so gebildete längliche Backware zu einem Ring zu schließen.

All die genannten Backwaren haben den Nachteil, daß sie, wie schon angeführt, entweder nur in frischem Zustand wohlschmeckend sind, oder daß sie dann bei neuerlichem Überbacken trocken und spröde werden.

Der Erfindung liegt die Aufgabe zugrunde eine Backware der eingangs genannten Art zu schaffen, welche einerseits rasch und einfach zu fertigen ist und andererseits den guten aromatischen Geschmack auch in nicht mehr frischem Zustand bzw. in wieder erwärmtem Zustand besitzt. Erfindungsgemäß wird diese Aufgabe dadurch gelöst, daß die Backware aus einem Teiggemisch, vorzugsweise Weißgebäckteig und Pizzateig gefertigt ist, welchem Käse, vorzugsweise geriebener Käse, gleichmäßig verteilt zugesetzt ist.

Eine derartige Ausbildung hat den Vorteil, daß einerseits auf Grund der Mischung aus verschiedenen Teigsorten, insbesondere Weißgebäckteig und Pizzateig, als auch durch die Zumischung von Käse erzielt wird, der Teig auch in altbackenem Zustand geschmeidig ist, so daß er bei Wiedererhitzen wieder seine knusprige Konsistenz erhält. Der zugesetzte Käse bewirkt nämlich, daß einerseits der Teig während des Verarbeitens sehr geschmeidig wird und andererseits durch den an der Außenseite befindlichen Käse beim Backen der Backware eine wohlschmeckende Kruste gegeben wird. Außerdem wird bei Wiedererhitzen des Teiges, z.B. nachdem die Backware tiefgefroren wurde, der Käse durch das Erhitzen wieder verflüssigt, wodurch der Teig wieder zu seiner alten Geschmeidigkeit zurückfindet.

Vorteilhafterweise kann die Backware in an sich bekannter Weise gerollt sein, wobei als Fülle ein herkömmlicher Pizzabelag mit der Backware mitgerollt ist. Dadurch erhält die Backware geschmacklich Pizzacharackter, wobei vermieden wird, daß bei längerem Liegenlassen der Backware der Pizzabelag austrocknet. Eine derartige Backware ist daher auch in kaltem Zustand sehr gut zum Verzehr geeignet.

Bei einem vorteilhaften Verfahren zur Herstellung der erfindungsgemäßen Backware wird unter Beimischung von Käse, vorzugsweise geriebenem Käse, ein Teiggemisch, vorzugsweise aus Weißgebäckteig und Pizzateig, hergestellt, der Teig ausgerollt und mit Fülle bestrichen. Dadurch wird in einem Arbeitsgang die gesamte Backware hergestellt, so daß nach Fertigstellung das Gebäck zur Füllung nicht mehr weiter bearbeitet werden muß. Es ist dabei nicht unbedingt erforderlich, daß die Backware sofort gebacken wird. Es könnte beispielsweise ohne weiteres die Backware in rohem Zustand eingefroren oder sonstwie haltbar gemacht werden und die Backware erst dann, wenn sie benötigt wird, im Backrohr gebacken werden. Es eignet sich somit die erfindungsgemäße Backware sehr gut zur Vorratshaltung, da auf Grund der Teigmischung und auf Grund des zugesetzten Käses immer ein die gewünschte Konsistenz aufweisendes Gebäck erzielt wird.

Dabei kann als Fülle herkömmlicher Pizzabelag verwendet werden, wobei die mit Fülle belegten Teigplatten zu Stangenform gerollt werden. Dies ergibt einerseits ein saftiges Gebäck, wobei andererseits ein Austrocknen des Pizzabelages verhindert ist.

Nachstehend wird an Hand eines Beispiels die Herstellung der erfindungsgemäßen Backware beschrieben.

Es werden 1/8 l Milch mit einem 1/8 l Wasser vermischt und darin ein Päckchen Backhefe aufgeschlämmt. Danach werden 8 dag geriebener Emmentaler und Weizenmehl zugesetzt, bis ein weicher Teig entsteht, welchem man einen halben Teelöffel Salz zusetzt. Der so erhaltene Teig wird mit einem Knethaken 10 Minuten lang durchgeschlagen und danach der Rest des Mehles, welches eine Gesamtmenge von etwa 40 dag aufweist, sowie ein Ei in den Teig eingemischt und der gesamte Teig auf einem Brett geknetet. Der so erhaltene Teig ist auf Grund der eingesetzten Menge der Teigkomponenten ein Teiggemisch aus einem Weißgebäckteig und Pizzateig, wobei bei dem Pizzateig an Stelle des üblicherweise verwendeten Öles Käse zugesetzt wurde.

Den so erhaltenen Teig läßt man gehen und knetet ihn danach nochmals durch. Danach wird der Teig ausgerollt und mit Tomatensauce, Käse, Schinken oder Salami oder sonstigen in der Pizzaherstellung üblichen Zutaten belegt. Danach wird die Teigplatte in Dreiecke zerteilt, welche zu Stangen zusammengerollt werden. Man formt dabei etwa 20 derartige Stangen. Die erhaltenen Stangen werden auf ein befettetes Backblech gelegt und nochmals zugedeckt gehen gelassen. Danach bestreicht man sie mit kaltem Wasser und schiebt sie in ein vorgeheiztes Rohr, wo man sie 10 Minuten bei großer Hitze bäckt. Danach wird das Rohr auf Mittelhitze zurückgeschaltet und die Backwaren weitere 5 Minuten gebacken. Anschließend werden die Backwaren schnell mit Dotter bestrichen und noch weitere 5 Minuten bei Mittelhitze gebacken.

Die fertigen Backwaren können entweder in noch warmen Zustand verzehrt werden, oder aber sie werden auf einem Rost erkalten gelassen.

**Patentansprüche**

1. Mit einer Fülle versehene Backware, dadurch gekennzeichnet, daß sie aus einem Teiggemisch, vorzugsweise Weißgebäckteig und Pizzateig, gefertigt ist, welchem Käse, vorzugsweise geriebener Käse, gleichmäßig verteilt zugesetzt ist.

2. Backware nach Anspruch 1, dadurch gekennzeichnet, daß die Backware in an sich bekannter Weise gerollt ist, wobei als Fülle ein herkömmlicher Pizzabelag mit der Backware mitgerollt ist.

3. Verfahren zur Herstellung einer Backware gemäß Anspruch 1, dadurch gekennzeichnet, daß unter Beimischung von Käse, vorzugsweise geriebenem Käse, ein Teiggemisch, vorzugsweise aus Weißgebäckteig und Pizzateig, hergestellt, der Teig ausgerollt und mit Fülle bestrichen wird.

4. Verfahren nach Anspruch 3, dadurch gekennzeichnet, daß als Fülle herkömmlicher Pizzabelag verwendet wird, wobei die mit Fülle belegten Teigplatten zu Stangenform gerollt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 020 184 (J.B. CHESNER) <br> * Anspruch; Tabelle 1; Figur * | 1 | A 21 D 13/00 <br> A 21 D 2/34 |
| Y | | 2-4 | |
| Y | US-A-4 400 404 (J. PERSI) <br> * Anspruch; Figur * <br> --- | 2-4 | |
| X | FR-A-2 558 686 (B.L. FRATTINI) <br> * Ansprüche 1,2 * <br> --- | 1 | |
| A | FR-A- 981 242 (PAINDOR) <br> * Seite 2, Spalte 1, Zeilen 34-39; <br> Seite 2, Spalte 2, Zeilen 13-15 * <br> --- | 1 | |
| A | BE-A- 747 163 (ETS BARY-DELAHAUT) <br> ----- | | |

RECHERCHIERTE
SACHGEBIETE (Int. Cl.4)

A 21 D

Der vorliegende Recherchenbericht wurde für alle Patentansprüche erstellt

| Recherchenort | Abschlußdatum der Recherche | Prüfer |
|---|---|---|
| DEN HAAG | 01-07-1988 | COUCKE A.O.M. |

EPO FORM 1503 03.82 (P0403)